# EUROPEAN PATENT SPECIFICATION

(11) **EP 1 084 019 B1**
(45) Date of publication and mention of the grant of the patent: **07.08.2002**
(21) Application number: 98924948.7
(22) Date of filing: 28.05.1998
(51) Int. Cl.: B29C 47/16, B29C 47/08

(54) **ADJUSTABLE, LEAK-FREE SEALING DEVICE FOR POLYMER DIES**
EINSTELLBARER LECKFREIER DICHTUNGSVORRICHTUNG FÜR KUNSTSTOFFDÜSEN
DISPOSITIF DE SCELLEMENT REGLAGE ET SANS FUITES POUR MATRICES POLYMERES

(43) Date of publication of application: 21.03.2001
(73) Proprietor: E.I. du Pont de Nemours and Company (a Delaware corporation), Wilmington Del. 19898 (US)
(72) Inventor: LAMKEMEYER, Matthias, Hubert, D-48565 Steinfurt (DE); HUECHTER, Gerhard, Theodor, D-59229 Ahlen (DE); MOENNIG, Heinrich, D-48231 Warendorf (DE)
(74) Representative: Jones, Alan John
(86) International application number: US9810870
(87) International publication number: WO9961218

(56) References cited:
- EP-A- 0 093 358
- DE-A- 2 608 063
- US-A- 2 644 195
- US-A- 3 293 689
- US-A- 3 829 274
- US-A- 4 863 361
- PATENT ABSTRACTS OF JAPAN vol. 013, no. 055 (M-795), 8 February 1989 & JP 63 260419 A (SUMITOMO HEAVY IND LTD), 27 October 1988

## Description

### BACKGROUND OF THE INVENTION

The present invention relates to extrusion dies for plasticized material and more particularly to an adjustable, leak-free sealing device for regulating the width of the plastic film or sheet extruded from dies having an orifice in the shape of a long narrow slit.

The-process of extruding plastics to form a wide variety of articles is well established technology. Extrusion has been utilized to produce sheets, films, pellets, wire and cable coatings, and useful articles. Typically, a plastic material is fed to an extruder wherein the temperature is raised above the glass transition temperature of the plastic such that the plastic will flow. The molten plastic is mechanically forced through a shaping or extrusion die under a positive pressure or force.

A significant drawback associated with the extrusion of sheets of different widths is the need to change the extrusion dies when it is desired to vary the width or thickness of the plastic sheet being extruded. Removing the die and replacing it with a new die of different dimensions has proved to be cumbersome and cause a significant amount of downtime. It has also been necessary to stockpile dies of varying widths in order to satisfy the demands of the marketplace for sheets of varying widths.

Typically, a die comprises a pair of lips defining a die outlet orifice from which molten polymer is drawn to form a sheet. The distance between the lips is commonly referred to as the lip gap. One of the lips is typically a flexible lip which is connected to an adjusting means for varying the width of the lip gap, and thereby the thickness of the sheet.

The use of an adjustable deckle to block or close a portion of the die orifice, thereby altering the width of the die and the extruded article, has been disclosed in the art. Deckles may be internal, external, or an external/internal combination, and external deckles may be mounted on both sides of the die or from a single side of the die. The adjustable external deckles disclosed in the prior art, for example U.S. Pat. Nos. 2,859,475 to Tornberg, 3,293,689 to Chiseiko et al., and 3,238,563 to Hoffman, use set screws to firmly lock the deckle into place and provide a leak-free seal. In order to adjust these deckles, the screws must first be loosened, the deckled moved, and the screws retightened to ensure a leak-free seal. It is readily apparent that the use of screws to hold the deckle in place is labor intensive, requiring manual loosening and retightening for each adjustment, thereby prohibiting the automation of sheet width adjustment.

The leak-free sealing device disclosed herein comprises a plurality of springs for biasing a sealing rod against the die orifice. The springs exert a constant force equal to or greater than the die orifice outlet pressure, thereby providing a leak-free seal. In contrast to the set screws employed in the prior art, the springs do not require manual loosening and tightening before and after each width adjustment. Thus, the leak-free sealing device disclosed herein can be readily incorporated into an automated sheet width adjustment system.

### SUMMARY OF THE INVENTION

The present invention provides an adjustable, leak-free sealing device for sealing the die orifice of a molten polymer die. The sealing device comprises a sealing bar seated against and blocking a portion of the die orifice, a deckle holder slideably connected to one side of the die and extending under the die orifice, and a plurality of springs seated on the deckle holder and biasing the sealing bar against a portion of the die orifice. The springs have a combined spring force equal to or greater than the die orifice outlet pressure such that the sealing bar provides a leak-free seal along a portion of the die orifice.

In a preferred embodiment, the sealing bar is made from carbon fiber reinforced polytetrafluoroethylene. An edge of the sealing bar abuts the polymer sheet exiting the die, and preferably the abutting edge of the sealing bar has a negative slope, most preferably a negative slope of about 10°.

In order to facilitate changes in the width of the polymer sheet exiting the die, the sealing device may further comprise a driving means connected to the deckle holder such that the driving means slides the deckle holder. A computer may be connected to the driving means, thereby providing on-line control of the width of the polymer sheet. Integration of a deckle holder positioning means allows the computer to track the location of the sealing bar in relation to the die orifice. A die extension may be added to an end of the die to prevent rotational movement and lateral deflection of the sealing device.

The present invention also provides a method of controlling on-line the width and thickness of a sheet of polymer exiting the die, comprising the steps of supplying a die having an adjustable lip to control the lip gap, modifying the die to include the sealing device describe herein, integrating the adjustable lip and the sealing device with a computer, and entering a desired sheet width and thickness into the computer, whereby the computer monitors and adjusts the width of the sheet by sliding the sealing bar along the die orifice and the thickness of the sheet by adjusting the lip gap such that the desired sheet width and thickness are obtained.

### BRIEF DESCRIPTION OF THE DRAWINGS

Figure 1 is a cross-sectional view of a die equipped with the adjustable, leak-free sealing device described herein.
Figure 2 is a perspective view of a die equipped with the die extension and slide rail described herein.
Figure 3 is a cross-sectional view of a die equipped with the die extension and adjustable, leak-free sealing device described herein.
Figure 4 is a cross-sectional view taken along line IV-IV of Figure 3.
Figure 5 is a perspective view of the sealing bar described herein.
Figure 6 is a perspective view of the deckle holder described herein.

### DETAILED DESCRIPTION

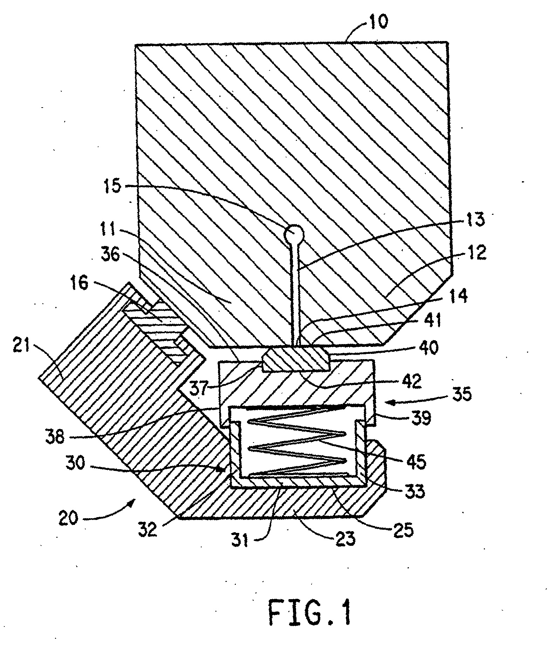

Referring to Figure 1, die 10 comprises a pair of lips 11 and 12 located opposite of one another and terminating to define die orifice 14. The distance between lips 11 and 12 is lip gap 13. Typically, one of the lips is a fixed lip and the other lip is an adjustable lip such that the lip gap can be adjusted. Die 10 further comprises flow channel 15, which is in communication with die orifice 14. Molten polymer is distributed throughout the die by the flow channel and flows out of the die orifice to form a sheet having a thickness approximately equal to the lip gap.

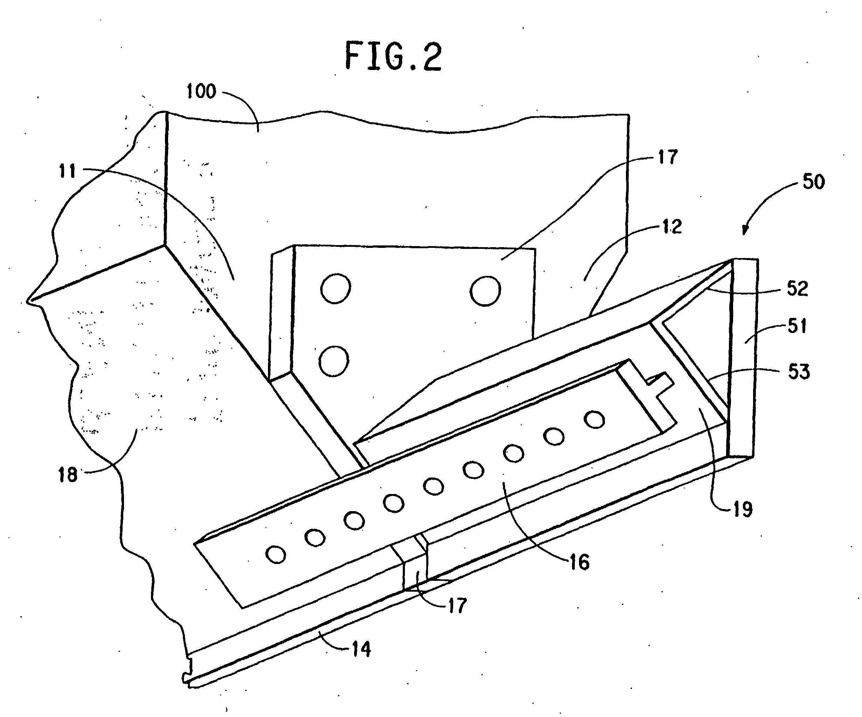

Sealing device 20 comprises deckle holder 21, sealing bar 40, and a plurality of springs 45. Deckle holder 21 is slideably connected to the die, preferably though use of slide rail 16 mounted parallel to die orifice 14, as shown in Figure 2. Other known slide mechanisms may be substituted for the slide rail. Preferably, the deckle holder is mounted externally from a single side of the die, and most preferably, the deckle holder is mounted to the fixed lip rather than the adjustable lip. A single sealing device may be used to block one end of the die orifice. Preferably, a pair of sealing devices is used to block both ends of the die orifice, whereby the polymer sheet is drawn from the center of the die.

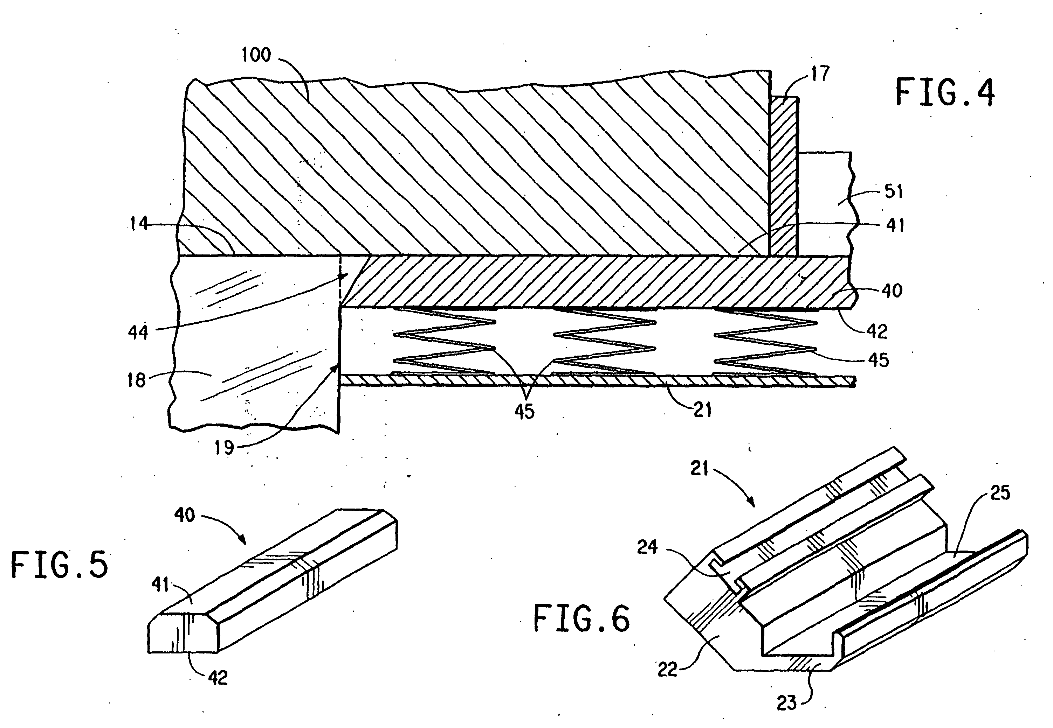

The preferred deckle holder 21, as shown in Figure 6, is an angled member having an upper end portion 22 and a lower end portion 23. The upper end portion 22 has a groove 24 conforming to the cross-sectional shape of slide rail 16 such that the deckle holder slides along the slide rail upon mounting. The deckle holder extends from the slide rail and terminates under die orifice 14 such that upper surface 25 of end portion 23 is positioned beneath and parallel to the die orifice.

A plurality of springs 45 are seated on upper surface 25 of deckle holder 21. In a preferred embodiment shown in Figure 1, spring holder 30 is mounted atop upper surface 25 of deckle holder 21. Spring holder 30 is preferably a rectangular trough having a base 31 and a pair of opposing walls 32 and 33 extending perpendicular to the base and running the length of the spring holder. The springs are seated in the spring holder and walls 31 and 32 hold the springs in place and prevent shifting.

Sealing bar 40, shown in Figure 5, comprises upper sealing surface 41 and bottom surface 42 and preferrably has a trapezoidal-like cross-section wherein the upper sealing surface is narrower than the bottom surface. Referring to Figures 1 and 4, upper sealing surface 41 of sealing bar 40 is seated against a portion of die orifice 14 and bottom surface 42 is connected to springs 45, whereby the springs bias the sealing bar against a portion of the die orifice such that the upper sealing surface provides a leak-free seal along a portion of the die orifice.

In a preferred embodiment shown in Figure 1, sealing bar holder 35 is interposed between sealing bar 40 and springs 45. Sealing bar holder 35 is preferably an inverted rectangular trough having a base 36 and a pair of opposing walls 38 and 39 extending perpendicular to the base and running the length of the sealing bar holder. The distance between the insides of walls 38 and 39 should be slightly greater than the distance between the outsides of walls 32 and 33 of spring holder 30, such that sealing bar holder 35 fits over spring holder 30 like a cap. Base 36 has a longitudinal groove 37 wherein the groove is sized to receive bottom surface 42 of sealing bar 40. It is to be understood that the use of the spring holder and sealing bar holder is a preferred embodiment, and that the springs may directly contact either the deckle holder, the sealing bar, or both.

Referring to Figure 4, polymer sheet 18 exits the unsealed portion of die orifice 14. Abutting edge 43 of sealing bar 40 bounds polymer sheet 18, thereby defining sheet edge 19. Generally, bottom surface 42 of sealing bar 40 is perpendicular to sheet edge 19, and bottom surface 42 and upper sealing surface 41 of sealing bar 40 are of different lengths, thereby defining angle 44 in relation to sheet edge 19. When bottom surface 42 is longer than upper sealing surface 41, angle 44 is referred to as a negative angle. When upper sealing surface 41 is longer than bottom surface 42, angle 44 is referred to as a positive angle. Angle 44 may be varied in response to the particular polymer and operating conditions in order to minimize the amount of polymer that sticks to the abutting edge of the sealing bar. Preferably, angle 44 is a negative angle, and most preferably, angle 44 is about negative 10°.

Sealing bar 40 preferably comprises a carbon fiber reinforced polytetrafluoroethylene, such as the material sold under the trademark ZYMAXX® by E. I, du Pont de Nemours and Company of Wilmington, Delaware. Other suitable materials include glass fiber reinforced polytetrafluoroethylene, metal reinforced polytetrafluoroethylene, polyaryl ether ketone, glass fiber reinforced polyaryl ether ketone, and carbon fiber reinforced polyaryl ether ketone. Polyaryl ether ketone is sold under the trademark TECAPEEK® by the Ensinger GmbH & Co. of Nufringen, Germany.

The number of springs required to bias the sealing bar against the die orifice is based upon the die orifice outlet pressure. Polymer exits the die orifice under pressure, and thus a downward force is exerted by the polymer upon the sealing bar when a portion of the die orifice is blocked. The polymer force is calculated by multiplying the maximum possible die pressure by the area of upper sealing surface 41, and including the appropriate safety factor. In order to provide a leak-free seal, the biasing force exerted by the springs must be equal to or greater than the polymer force.

Using the polymer force as the basis, the number of springs can be back calculated by determining the force of each spring as a function of spring deflection. The spring deflection is defined as the distance between the deckle holder and the sealing bar, or in the preferred embodiment, between the bar holder and the spring holder. The spring deflection can be varied by changing the thickness of the spring holder or bar holder, changing the dimensions of the deckle holder, or inserting shims between the deckle holder and sealing bar.

Disc springs are preferred as they are easily layered in columns to exert the required force. Other suitable springs include but are not limited to coil springs, helical springs, and compression springs of variable cross sections and geometries. The springs may be of any material suitable for the particular operating conditions.

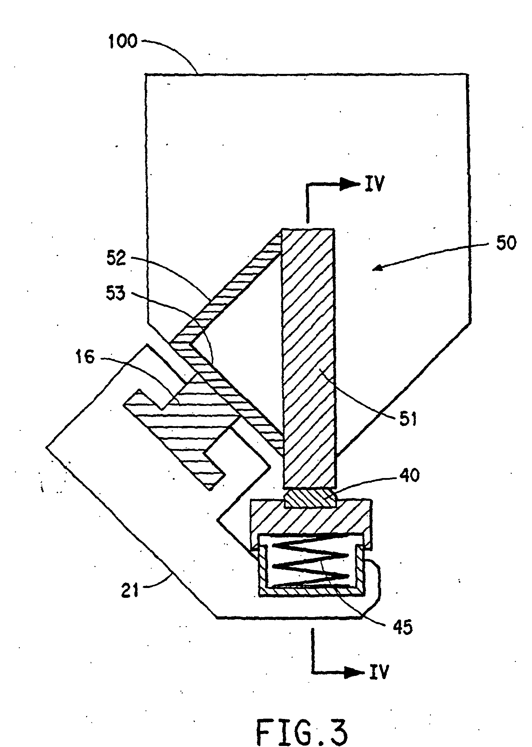

A preferred embodiment includes die extension 50, as shown in Figures 2, 3 and 4, connected to an end of die 100. Die extension 50 comprises a horizontal member 51 and side members 52 and 53 connected to form a triangular cross-section. Die extension 50 is connected at a right angle to end plate 17 such that the die extension extends substantially perpendicular to the end plate, the bottom edge of horizontal member 51 lies in substantially the same plane as die orifice 14, and face 19 of side member 53 lies in substantially the same plane as face 18 of die lip 11. Slide rail 16 extends parallel to face 18 of die lip 11 and is connected to face 19 of side member 53. Polymer exiting the die orifice pushes against the sealing bar and results in the sealing device being subjected to a rotation moment. The die extension secures the slide rail and prevents rotational movement and lateral deflection of the sealing device, thereby providing a leak-free seal.

The sealing device described herein is easily adopted into an automated system whereby the width and thickness of the polymer sheet exiting the die are computer controlled. The springs bias the sealing bar against the die orifice with a constant force and there is no need to manually loosen and tighten set screws prior to and after making a sheet width adjustment. Furthermore, the spring force can be calculated such that the spring force and polymer force are equal. The force equilibrium and the low friction of polytetrafluoroethylene result in the sealing bar easily moving along the slide rail by a driving means such as a servo motor, and thereby changing the sheet width. An electric servo motor is preferred as it is easily controlled and readily attached to a computer control means, but other drivers such as pneumatic or hydraulic motors may be employed. By combining the automated sealing device described above with known computer control systems for die gap adjustment, on-line computer control of both the sheet width and thickness are achieved.

A positioning means may be mounted on the deckling system and connected to the computer control means, such that the location of the sealing bar in relation to the die orifice is transmitted to the computer. The positioning means preferably includes path detection and measurement, digital or analog output, and a limit switch to prevent the sealing device from being driven beyond operating limits.

Various modifications and alterations of the present invention will become apparent to those skilled in the art without departing from the scope and spirit of this invention.

## Claims

1. An adjustable, leak-free sealing device (20) for sealing an extrusion die (10) having a pair of lips forming a die orifice (14) from which molten polymer is drawn to form a polymer sheet, comprising:
a) a sealing bar (40) seated against a portion of said die orifice, an edge (43) of said sealing bar abutting said polymer sheet;
b) a deckle holder (21) slideably connected to one side of the die, said deckle holder extending under said die orifice; and
c) a plurality of springs (45) seated on said deckle holder and biasing said sealing bar against a portion of said die orifice, said springs having a combined spring force equal to or greater than the die orifice outlet pressure such that said sealing bar provides a leak-free seal along a portion of said die orifice;
d) a die extension (50) connected to an end of said die, said die extension positioned at a right angle from the end of said die and parallel to said die lips, said deckle holder connected to said die extension such that a rotation moment exerted by the polymer against the sealing bar is offset, thereby providing a leak-free seal.

2. The sealing device of claim 1 wherein said sealing bar comprises carbon fiber reinforced polytetrafluoroethylene.

3. The sealing device of claims 1 or 2 wherein said abutting edge (43) of said sealing bar has a negative slope.

4. The sealing device of claim 3 wherein said negative slope is about 10°.

5. The sealing device of claim 1 wherein said springs are selected from the group consisting of coil springs, helical springs, compression springs, and disc springs.

6. The sealing device of claim 1 further comprising:
d) a means for driving connected to said deckle holder such that said driving means slides said deckle holder, thereby moving said sealing bar along said die orifice and changing the width of the polymer sheet exiting the die; and
e) a means for computer control connected to said driving means, said computer control means communicating with said driving means such that the width of the polymer sheet is controlled.

7. The sealing device of claim 6 wherein said means for driving is a servo motor.

8. The sealing device of claim 6 further comprising:
f) a means for indicating the position of said deckle holder mounted on said sealing device and connected to the computer control means such that the location of the sealing bar in relation to the die orifice is transmitted to the computer control means.

9. A method of controlling on-line the width and thickness of a sheet of polymer exiting a die orifice, comprising:
a) supplying a die having a fixed lip and an adjustable lip, said fixed lip and said adjustable lip defining a lip gap extending the length of the die orifice;
b) modifying the die to include:
i) a sealing bar seared against a portion of said die orifice, an edge of said sealing bar abutting said polymer sheet;
ii) a deckle holder slideably connected to one side of the die, said deckle holder extending under said die orifice; and
iii) a plurality of springs seated on said deckle holder and biasing said sealing bar against a portion of said die orifice, said springs having a combined force equal to or greater than the die orifice outlet pressure such that said sealing bar provides a leak-free seal along a portion of said die orifice;
c) integrating the adjustable lip and the sealing device with a computer; and
d) entering a desired sheet width and thickness into the computer, whereby the computer monitors and adjusts the width of the sheet by sliding the sealing bar along the die orifice and the thickness of the sheet by adjusting the lip gap such that the desired sheet width and thickness are obtained.

## Patentansprüche

1. Einstellbare leckfreie Dichtungsvorrichtung (20) für das Abdichten einer Extruderdüse (10), die ein Paar Lippen aufweist, die eine Düsenöffnung (14) bilden, aus der das geschmolzene Polymer gezogen wird, um eine Polymerfolie zu bilden, die aufweist:
a) eine Dichtungsstange (40), die an einem Abschnitt der Düsenöffnung liegt, wobei ein Rand (43) der Dichtungsstange an die Polymerfolie anstößt;
b) einen Austrittsbreitenreguliervorrichtungshalter (21), der verschiebbar mit einer Seite der Düse verbunden ist, wobei sich der Austrittsbreitenreguliervorrichtungshalter unter der Düsenöffnung erstreckt; und
c) eine Vielzahl von Federn (45), die am Austrittsbreitenreguliervorrichtungshalter anliegen und die Dichtungsstange gegen einen Abschnitt der Düsenöffnung vorspannt, wobei die Federn eine kombinierte Federkraft aufweisen, die gleich dem oder größer als der Düsenöffnungsaustrittsdruck ist, so daß die Dichtungsstange eine leckfreie Dichtung längs eines Abschnittes der Düsenöffnung bewirkt;
d) eine Düsenverlängerung (50), die mit einem Ende der Düse verbunden ist, wobei die Düsenverlängerung unter einem rechten Winkel vom Ende der Düse und parallel zu den Düsenlippen positioniert ist, wobei der Austrittsbreitenreguliervorrichtungshalter mit der Düsenverlängerung so verbunden ist, daß ein Drehmoment, das durch das Polymer gegen die Dichtungsstange ausgeübt wird, ausgeglichen wird, wodurch eine leckfreie Dichtung bewirkt wird.

2. Dichtungsvorrichtung nach Anspruch 1, bei der die Dichtungsstange kohlenstoffaserverstärktes Polytetrafluorethylen aufweist.

3. Dichtungsvorrichtung nach Anspruch 1 oder 2, bei der der anstoßende Rand (43) der Dichtungsstange eine negative Neigung aufweist.

4. Dichtungsvorrichtung nach Anspruch 3, bei der die negative Neigung etwa 10° beträgt.

5. Dichtungsvorrichtung nach Anspruch 1, bei der Federn aus der Gruppe ausgewählt werden, die besteht aus: Spiralfedern; Schraubenfedern; Druckfedern; und Tellerfedern.

6. Dichtungsvorrichtung nach Anspruch 1, die außerdem aufweist:
d) eine Einrichtung für das Antreiben, die mit dem Austrittsbreitenreguliervorrichtungshalter so verbunden ist, daß die Antriebseinrichtung den Austrittsbreitenreguliervorrichtunghalter verschiebt, wodurch die Dichtungsstange längs der Düsenöffnung bewegt und die Breite der Polymerfolie, die aus der Düse austritt, verändert wird; und
e) eine Einrichtung für die Computersteuerung, die mit der Antriebseinrichtung verbunden ist, wobei die Computersteuereinrichtung mit der Antriebseinrichtung so verbunden ist, daß die Breite der Polymerfolie gesteuert wird.

7. Dichtungsvorrichtung nach Anspruch 6, bei der die Einrichtung für das Antreiben ein Servomotor ist.

8. Dichtungsvorrichtung nach Anspruch 6, die außerdem aufweist:
f) eine Einrichtung für das Anzeigen der Position des Austrittsbreitenreguliervorrichtungshalters, der am der Dichtungsvorrichtung montiert und mit der Computersteuereinrichtung so verbunden ist, daß die Position der Dichtungsstange mit Bezugnahme auf die Düsenöffnung zur Computersteuereinrichtung übertragen wird.

9. Verfahren zum direkten Steuern der Breite und der Dicke einer Folie des Polymers, die aus einer Düsenöffnung austritt, das aufweist:
a) Liefern einer Düse mit einer stationären Lippe und einer einstellbaren Lippe, wobei die stationäre Lippe und die einstellbare Lippe einen Lippenspalt definieren, der sich über die Länge der Düsenöffnung erstreckt;
b) Abwandeln der Form so, daß sie umfaßt:
i) eine Dichtungsstange, die an einem Abschnitt der Düsenöffnung liegt, wobei ein Rand der Dichtungsstange an die Polymerfolie anstößt;
ii) einen Austrittsbreitenreguliervorrichtungshalter, der verschiebbar mit einer Seite der Düse verbunden ist, wobei sich der Austrittsbreitenreguliervorrichtungshalter unter der Düsenöffnung erstreckt; und
iii) eine Vielzahl von Federn, die am Austrittsbreitenreguliervorrichtungshalter anliegen und die Dichtungsstange gegen einen Abschnitt der Düsenöffnung vorspannt, wobei die Federn eine kombinierte Kraft aufweisen, die gleich dem oder größer als der Düsenöffnungsaustrittsdruck ist, so daß die Dichtungsstange eine leckfreie Dichtung längs eines Abschnittes der Düsenöffnung bewirkt;
c) Vervollkommnen der einstellbaren Lippe und der Dichtungsvorrichtung mit einem Computer; und
d) Eingeben einer gewünschten Folienbreite und -dicke in den Computer, wodurch der Computer die Breite der Folie überwacht und einstellt, indem die Dichtungsstange längs der Düsenöffnung verschoben wird, und die Dicke der Folie, indem der Lippenspalt so eingestellt wird, daß die gewünschte Folienbreite und -dicke erhalten werden.

## Revendications

1. Dispositif d'étanchéité ajustable exempt de fuites (20) destiné à établir l'étanchéité d'une filière d'extrusion (10) comportant une paire de lèvres formant un orifice de filière (14) à partir duquel du polymère fondu est aspiré pour former une feuille de polymère, comprenant:
a) une barre d'étanchéité (40) reposant contre une partie dudit orifice de filière, un bord (43) de ladite barre d'étanchéité butant contre ladite feuille de polymère;
b) un support de réglette de bordure (21) raccordé par glissement sur un côté de la filière, ledit support de la réglette de bordure s'étendant au-dessous dudit orifice de la filière; et
c) plusieurs ressorts (45) agencés sur ledit support de la réglette de bordure et poussant ladite barre d'étanchéité contre une partie dudit orifice de la filière, lesdits ressorts ayant une force élastique combinée égale ou supérieure à la pression de sortie de l'orifice de la filière, de sorte que ladite barre d'étanchéité établit un joint exempt de fuites le long d'une partie dudit orifice de filière;
d) une extension de filière (50) raccordée à une extrémité de ladite filière, ladite extension de la filière étant positionnée à angle droit par rapport à l'extrémité de ladite filière et parallèlement aux deux dites lèvres de filière, ledit support de la réglette de bordure étant raccordé à ladite extension de filière de sorte qu'un déplacement par rotation exercé par le polymère contre la barre d'étanchéité est décalé, établissant ainsi un joint exempt de fuites.

2. Dispositif d'étanchéité selon la revendication 1, dans lequel ladite barre d'étanchéité est composé de polytétrafluoréthylène renforcé de fibres de carbone.

3. Dispositif d'étanchéité selon les revendications 1 ou 2, dans lequel ledit bord de butée (43) de ladite barre d'étanchéité a une inclinaison négative.

4. Dispositif d'étanchéité selon la revendication 3, dans lequel ladite inclinaison négative est de l'ordre de 10°.

5. Dispositif d'étanchéité selon la revendication 1, dans lequel lesdits ressorts sont sélectionnés dans le groupe constitué de ressorts à boudin, de ressorts hélicoïdaux, de ressorts de compression et de ressorts à disques.

6. Dispositif d'étanchéité selon la revendication 1, comprenant en outre:
d) un moyen d'entraînement raccordé audit support de la réglette de bordure de sorte que ledit moyen d'entraînement fait coulisser ledit support de la réglette de bordure, déplaçant ainsi ladite barre d'étanchéité le long dudit orifice de la filière et changeant la largeur de la feuille de polymère sortant de la filière; et
e) un moyen de commande par ordinateur connecté audit moyen d'entraînement, ledit moyen de commande par ordinateur communiquant avec ledit moyen d'entraînement de sorte à assurer la commande de la largeur de la feuille de polymère.

7. Dispositif d'étanchéité selon la revendication 6, dans lequel ledit moyen d'entraînement est un servomoteur.

8. Dispositif d'étanchéité selon la revendication 6, comprenant en outre :
f) un moyen d'indication de la position dudit support de réglette de bordure monté sur ledit dispositif d'étanchéité et connecté à un moyen de commande par ordinateur de sorte que l'emplacement de la barre d'étanchéité par rapport à l'orifice de la filière est transmis au moyen de commande par ordinateur.

9. Procédé de commande en ligne de la largeur et de l'épaisseur d'une feuille de polymère sortant d'un orifice de filière, comprenant les étapes ci-dessous:
a) fourniture d'une filière comportant une lèvre fixe et une lèvre ajustable, ladite lèvre fixe et ladite lèvre ajustable définissant un écartement entre les lèvres s'étendant le long de la longueur de l'orifice de la filière;
b) modification de la filière de sorte qu'elle englobe:
i) une barre d'étanchéité reposant contre une partie dudit orifice de la filière, un bord de ladite barre d'étanchéité butant contre ladite feuille de polymère;
ii) un support de réglette de bordure raccordé par glissement à un côté de la filière, ledit support de la réglette de bordure s'étendant au-dessous dudit orifice de la filière; et
iii) plusieurs ressorts agencés sur ledit support de la réglette de bordure et poussant ladite barre d'étanchéité contre une partie dudit orifice de la filière, lesdits ressorts ayant une force combinée égale ou supérieure à la pression de sortie de l'orifice de la filière, de sorte que ladite barre d'étanchéité établit un joint exempt de fuites le long d'une partie dudit orifice de la filière;
c) combinaison de la lèvre ajustable et du dispositif d'étanchéité avec un ordinateur, et
d) entrée d'une largeur et d'une épaisseur voulues de la feuille dans l'ordinateur, l'ordinateur surveillant et ajustant ainsi la largeur de la feuille en faisant glisser la barre d'étanchéité le long de l'orifice de la filière ainsi que l'épaisseur de la feuille en ajustant l'écartement entre les lèvres de sorte à assurer la largeur et l'épaisseur voulues de la feuille.
